# EUROPEAN PATENT APPLICATION

(11) **EP 1 557 763 A1**
(43) Date of publication of application: **27.07.2005**
(21) Application number: 02788745.4
(22) Date of filing: 06.12.2002
(51) Int. Cl.: G06F 13/00, H04M 11/00, H04L 12/54, H04L 12/58

(54) **COMMUNICATION TERMINAL AND MAIL SERVER**

(71) Applicant: FUJITSU LIMITED, Kawasaki-shi, Kanagawa 211-8588 (JP)
(72) Inventor: KAGAWA, Atsushi, FUJITSU NETWORK TECHNOLOGES LTD., Yokohama-shi, Kanagawa 222-0033 (JP)
(74) Representative: Hitching, Peter Matthew
(86) International application number: PCT/JP2002/012817
(87) International publication number: WO 2004/053701

(57) **Abstract**

The present invention relates to a communication terminal capable of transmitting and receiving electronic mails and to a mail server for performing the overall management relating to transmitting and receiving the electronic mails. The object of the present invention is to avoid damages caused by various spam mails flexibly and accurately without forcing a subscriber to perform complex operations. To this end, the communication terminal according to the present invention comprises a mail acquiring section acquiring electronic mails received via mail servers, a human-machine interfacing section which performs a human-machine interface relating to assignment of a spam mail among the acquired electronic mails, and a spam mail responding section setting the source of the spam mail assigned under the human-interface interface as a destination and delivering a return mail including predefined information indicating the spam mail.

## Description

### TECHNlCAL FIELD

The present invention relates to a communication terminal which is used to provide communication services capable of transmitting and receiving electronic mails and to a mail server for performing the overall management relating to transmitting and receiving the electronic mails.

### BACKGROUND ART

Recently, subscribers for a mobile communication system are drastically increasing and these subscribers are provided with services capable of transmitting and receiving electronic mails.

However, these services are likely to be improperly used to distribute the following unfair electronic mails and to intentionally attack a specific subscriber.
· Electronic mails which are distributed for the purpose of lopsided invitations, sales, advertisements, or the like
· Chain mails
· Unsolicited mails which damage a recipient by unfairly using HTML (Hypertext Markup Language) tags

Conventionally, in order to reduce or avoid damages caused by these mails (hereinafter, referred to as 'spam mails'), for example, countermeasures described below have been used.
· 'Change of Mail Address' - In a mail address (for example, o...o@d...d.ne.jp) which is automatically given to each subscriber when a mail account is set, a portion (o...o) corresponding to a telephone number are changed into a character or symbol string under a predefined rule, but a domain (@d...d.ne.jp) peculiar to a carrier accommodating the subscriber is not changed.
· 'Assigned Mail Refusal' - 'An electronic mail whose source corresponds to a specific mail address stored in a terminal' is automatically refused by the terminal.
· 'Assigned Mail Reception' -'An electronic mail whose source corresponds to any one of mail addresses stored in the terminal' is automatically received by the terminal.
· 'Collective Mail Refusal' - An electronic mail whose source has a mail address including a specific domain stored in the terminal is automatically refused.
· 'Collective Unusual Mail Refusal' - An electronic mail having an unusual form (for example, an electronic mail causing 'the terminal to be used as a pager') is completely refused.
· 'Mail Filtering' - An electronic mail which does not include a code composed of a desired character or symbol string is automatically refused and a destination of the electronic mail is treated as an unknown.

Moreover, as a prior art relating to the present invention, for example, as disclosed in JP-A-11-252252, 'a mobile communication terminal in which a mail address indicating a source of a spam mail is automatically extracted from the spam mail received by the terminal and stored and an electronic mail whose source has a mail address corresponding to the mail address stored in the terminal is refused' (hereinafter, simply referred to as 'related art') is known.

However, when 'Change of Mail Address' among the above-mentioned countermeasures is applied, even after the mail address is changed as described above, spam mails may be received, and thus the change of the mail address needs to be suitably performed.

Further, the above-mentioned 'Assigned Mail Reception' or 'Assigned Mail Refusal' has some problems in terms of operation or convenience due to the following problems and thus the damages caused by the spam mail are not necessarily and surely prevented.
· The mail address of the source of the spam mail needs to be suitably registered or updated in a manual manner.
· The maximum number of the mail addresses of the sources which can be registered in parallel generally has a limitation.
· When the spam mails have the common source and the mail address of the source is frequently changed, the corresponding mail address needs to be added as an object for registration. Thus, the maximum number needs to be set to a large value. However, it is actually difficult to set the maximum number to be the sufficient large value due to power consumption and other limitations.

Further, in order to accurately perform rigid distinction between electronic mails to be refused and other electronic mails, as for the above-mentioned 'Mail Filtering', 'Collective Unusual Mail Refusal', and 'Collective Mail Refusal', complex operations or managements relating to the setting or update of the mail address are forced upon an operator of the terminal, but the operations or managements are actually difficult. Thus, an electronic mail which does not correspond to the spam mail may be refused.

Further, in the above-mentioned 'related art', the identification of the spam mail is performed by the mobile communication terminal, and thus the mobile communication terminal is charged with a fee for the transfer of the spam mail which is an identification object.

That is, in the prior art described above, the mobile communication terminal which is likely to be damaged by the spam mail has not necessarily good operational characteristics or convenience, and thus the damages are not sufficiently reduced or avoided.

### Patent Document 1

JP-A-1 1-252252 (claims 1 and 2, and paragraphs 0018 to 0020 and 0024)

### DISCLOSURE OF INVENTION

It is an object of the present invention to provide a communication terminal and a mail server which can avoid damages caused by various spam mails flexibly and accurately without forcing complex operations upon a subscriber.

It is another object of the present invention to surely obtain a standard to be served for identification of a spam mail which is transmitted again from a common source in a predefined information form and a moment of an action to be performed against the spam mail, through the mail server.

It is still another object of the present invention to flexibly adapt to a demand of an operator who is damaged by the spam mail.

It is a further object of the present invention to obtain a standard to be served for identification of a spam mail and a moment of an action to be performed against the spam mail, without extremely limiting a format or size of information which can be delivered between each of the accommodated communication terminals.

It is a still further object of the present invention to flexibly deliver a standard to be served for identification of the spam mail in the mail server and a moment of an action to be performed against the spam mail based on a desired communication protocol from the communication terminal to the mail server.

It is another object of the present invention to flexibly adapt to a demand of an operator who is damaged by the spam mail.

It is still another object of the present invention to automatically prevent damages which are likely to be caused when the spam mail is transferred to an original destination with no regulation, as long as a database is properly updated.

It is a further object of the present invention to reduce a load as compared to a case where the source of the spam mail is notified that the spam mail is not transferred to a desired destination and the spam mail is simply discarded.

It is a still further object of the present invention to accurately query the transfer of the spam mail to the destination or to update a standard to be served for specification of the spam mail to be discarded, in response to a return mail which is transmitted by the communication terminal damaged by the spam mail.

It is another object of the present invention to prevent useless load and traffic increase according to connection or synchronization between plural databases, as compared to a case where the above-mentioned standard is distributed into the plural databases.

It is still another object of the present invention to prevent the spam mail from being uselessly transferred from a mail server, in which a communication terminal as the source of the spam mail is accommodated, to another mail server destination.

It is a further object of the present invention to flexibly adapt to a configuration of a communication system or a service type to be provided to various communication terminals.

It is a still further object of the present invention to enhance service quality and reliability of the communication system to which the present invention is applied, without extremely changing the configuration.

The above-mentioned objects can be achieved by a communication terminal which sets a source of a spam mail assigned under a human-machine interface as a destination and delivers to a mail server a return mail including predefined information indicating the spam mail.

In such a communication terminal, the above-mentioned source of the spam mail, together with predefined information, is accurately notified to the mail server which accommodates the communication terminal damaged by the spam mail.

Further, the above-mentioned objects can be achieved by a communication terminal which perform a human-machine interface relating to the assignment of a form of an action to be performed against a spam mail and appends a device form to a return mail to be delivered to a mail server.

In such a communication terminal, the mail server is notified of the form of the action to be performed against the spam mail under an operator's instruction, together with the source of the spam mail and predefined information.

In addition, the above-mentioned objects can be achieved by a communication terminal which appends predefined information to a mail address indicating a destination of a return mail in a predefined format.

In such a communication terminal, above-mentioned predefined information as well as the information other than the mail address indicating above-mentioned destination, among the information to be included in the return mail, is accurately notified to a mail server without any limitation on a word length, or the like.

Further, the above-mentioned objects can be achieved by a communication terminal which delivers to a mail server a mail address which indicates a source of a spam mail assigned under a human-machine interface and predefined information indicating the spam mail.

In such a communication terminal, the source of the spam mail, together with predefined information, is accurately notified to the mail server which accommodates the communication terminal damaged by the spam mail, as a collection of information not falling under the return mail.

Further, the above-mentioned objects can be achieved by a communication terminal which performs a human-machine interface relating to the assignment of a form of an action to be performed against a spam mail and notifies a mail server of the form of the action.

In such a communication terminal, the form of the action to be performed against the spam mail under an operator's instruction, together with the source of the spam mail and predefined information, is accurately notified to the mail server as a collection of information not falling under the return mail.

Further, the above-mentioned objects can be achieved by a mail server which, when an electronic mail which includes predefined information therein and whose mail address indicating a destination of the electronic mail is registered in a database is received, discards the received electronic mail.

In such a mail server, the electronic mail which includes above-mentioned predefined information and whose destination is represented by any one of the mail addresses registered in the database is prevented from being transferred to the destination.

In addition, the above-mentioned objects can be achieved by a mail server which, when an electronic mail which includes predefined information therein and whose mail address indicating a destination is registered in a database, excludes the electronic mail from delivery targets to a communication device corresponding to the destination.

In such a mail server, the source of the electronic mail which includes above-mentioned predefined information therein and whose destination is indicated by any one of the mail addresses in the database is notified that the destination of the previously transmitted electronic mail does not exist or the spam mail is refused, based on a predefined mail transmission protocol.

Further, the above-mentioned objects can be achieved by a mail server which registers a mail address indicating a destination of an electronic mail including predefined information in a database.

In such a mail server, as long as above-mentioned predefined information is included in the electronic mail which is transmitted by the communication terminal accommodated into the mail server according to the present invention or which is delivered from another mail server, the mail address indicating the destination of the electronic mail is suitably registered in the database.

Further, the above-mentioned objects can be achieved by a mail server in which a database is common to a plurality of mail servers according to the present invention.

In such a mail server, the standard to be served for specification of the spam mail whose transfer to the destination is queried or which is to be discarded is unitarily managed.

Further, the above-mentioned objects can be achieved by a mail server to which an electronic mail in which predefined information is appended to a mail address indicating the destination is delivered, when the mail server accommodates the destination.

In such a mail server, the standard to be served for specification of the spam mail whose transfer to the destination is queried or which is to be discarded is provided to the mail server which accommodates the communication terminal corresponding to the source of the spam mail.

Further, the above-mentioned objects can be achieved by a mail server which discards the electronic mail, in a form fit for attributes of a source and/or a destination of an electronic mail which includes predefined information and whose mail address indicating the destination is registered in a database.

In such a mail server, the discard form of the spam mail is maintained in a form fit for the attributes of the source and/or the destination of the spam mail.

Further, the above-mentioned objects can be achieved by a mail server which excludes the electronic mail from delivery targets to a communication device falling under the destination, in a form fit for attributes of a source and/or a destination of an electronic mail which includes predefined information and whose mail address indicating the destination is registered in a database.

In such a mail server, the form in which the spam mail is excluded from the delivery targets to the destination of the spam mail is maintained in a form fit for the attributes of the source and/or the destination of the spam mail.

In addition, the above-mentioned objects can be achieved by a mail server which registers a mail address indicating the destination of the electronic mail in a database, in a form fit for attributes of a source and/or a destination of an electronic mail including predefined information.

In such a mail server, the form in which the mail address indicating the destination of the spam mail is registered in the database is maintained in a form fit for the attributes of the source and/or the destination of the spam mail.

Further, the above-mentioned objects can be achieved by a mail server to which the electronic mail is delivered when the mail server accommodates the destination, in a form fit for attributes of a source and/or a destination of the electronic mail in which predefined information is appended to a mail address indicating the destination.

In such a mail server, the form in which the spam mail is delivered to the mail server indicating the destination of the spam mail is maintained in a form fit for the attributes of the source and/or the destination of the spam mail.

### BRIEF DESCRIPTION OF DRAWINGS

Fig. 1 is a principal block diagram of a communication terminal according to the present invention;
Fig. 2 is a principal block diagram of a mail server according to the present invention;
Fig. 3 is a diagram showing first to third embodiments of the present invention;
Fig. 4 is an operational flowchart of a mail server in the first to third embodiments of the present invention;
Fig. 5 is a diagram illustrating operations of the first to third embodiments of the present invention;
Fig. 6A is a diagram showing a configuration of a spam list;
Fig. 6B is a diagram showing a configuration of a sufferer list; and
Fig. 7A and 7B are diagrams showing a configuration of an electronic mail.

### BEST MODE FOR CARRYING OUT THE INVENTION

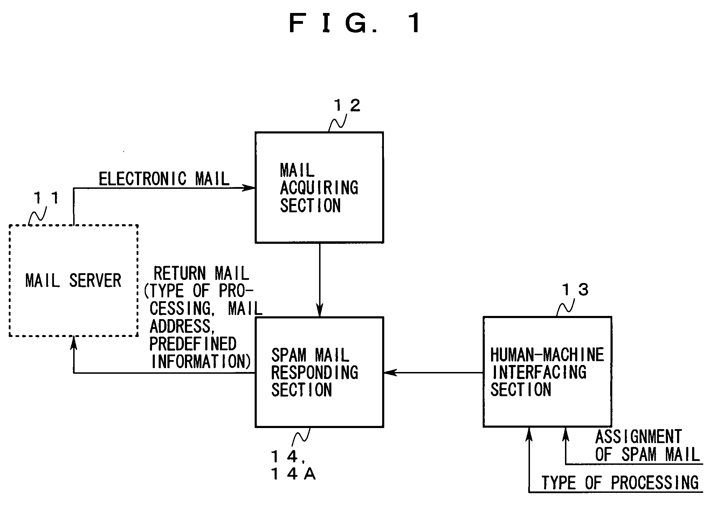

To begin with, a principle of a communication terminal according to the present invention will be described with reference to Fig. 1.

Fig. 1 is a principal block diagram of a communication terminal according to the present invention.

The communication terminal shown in Fig. 1 has a mail acquiring section 12, a human-machine interfacing section 13, and spam mail responding sections 14 and 14A.

The first principle of the communication terminal according to the present invention is as follows.

The mail acquiring section 12 acquires an electronic mail received via a mail server 11. The human-machine interfacing section 13 performs a human-machine interface relating to an assignment of a spam mail within the electronic mail acquired by the mail acquiring section 12. The spam mail responding section 14 sets a destination to a source of the spam mail assigned via the human-machine interfacing section 13 and delivers a return mail including predefined information indicating the spam mail to the mail server 11.

That is, the source of the spam mail assigned under the above-mentioned human-machine interface, together with predefined information, is notified to the mail server which accommodates the communication terminal damaged by the spam mail.

Therefore, the mail server can surely obtain a standard to be served for identification of the spam mail which is transmitted again from a common source in a predefined information form and a moment of an action to be performed against the spam mail.

The second principle of the communication terminal according to the present invention is as follows.

The human-machine interfacing section 13 performs a human-machine interface relating to an assignment of a form of an action which the mail server 11 has to perform to another electronic mail transmitted from the source of the spam mail. The spam mail responding section 14 appends the form of the action assigned via the human-machine interfacing section 13 to a return mail to be delivered to the mail server 11.

That is, the mail server is accurately notified of the form of the action to be performed against the spam mail under an operator's instruction, together with the source of the spam mail and predefined information.

Therefore, it is possible to flexibly adapt to a demand of an operator who is damaged by the spam mail.

The third principle of the communication terminal according to the present invention is as follows.

Predefined information is appended to a mail address indicating a destination of a return mail in a predefined format.

That is, such predefined information is accurately notified to a mail server without any limitation on a word length, or the like, even in case of the information except for a mail address which indicates the above-mentioned destination among the information included in the return mail.

Therefore, the mail server can obtain a standard to be served for identification of the spam mail and a moment of an action to be performed against the spam mail, without extremely limiting a format or a size of information which can be delivered between each of the accommodated communication terminals.

The fourth principle of the communication terminal according to the present invention is as follows.

The mail acquiring section 12 acquires an electronic mail received via the mail server 11. The human-machine interfacing section 13 performs a human-machine interface relating to an assignment of the spam mail within the electronic mail acquired by the mail acquiring section 12. The spam mail responding section 14A delivers to the mail server 11a mail address indicating a source of the spam mail which is assigned via the human-machine interfacing section 13 and predefined information indicating the spam mail.

That is, the source of the spam mail assigned under the above-mentioned human-machine interface, together with predefined information, is accurately notified as a collection of information not falling under the return mail to the mail server which accommodates a communication terminal damaged by the spam mail.

Therefore, in the mail server, the standard to be served for identification of the spam mail and the moment of the action to be performed against the spam mail are flexibly delivered from the above-mentioned communication terminal to the mail server based on a desired communication protocol.

The fifth principle of the communication terminal according to the present invention is as follows.

The human-machine interfacing section 13 performs a human-machine interface relating to an assignment of a form of an action which the mail server 11 has to perform to another electronic mail transmitted from the source of the spam mail. The spam mail responding section 14A notifies the mail server 11 of the form of the action assigned via the human-machine interfacing section 13.

That is, the form of the action to be performed against the spam mail under the operator's instruction, together with the source of the spam mail and predefined information, is accurately notified to the mail server as a collection of information not falling under the return mail.

Therefore, it is possible to flexibly adapt to the demand of the operator who is damaged by the spam mail.

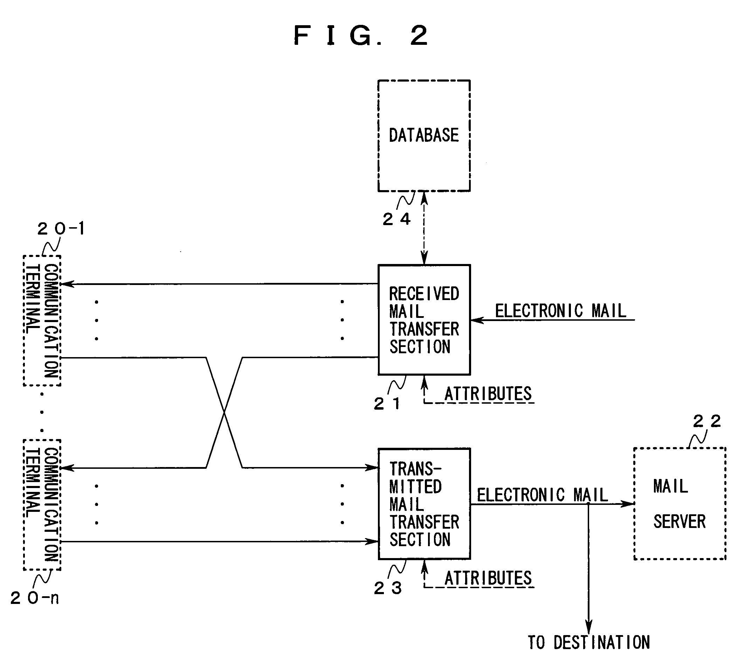

Hereinafter, a principle of the mail server according to the present invention will be described with reference to Fig. 2.

Fig. 2 is a principal block diagram of the mail server according to the present invention.

The mail server shown in Fig. 2 has a received mail transfer section 21 and a transmitted mail transfer section 23.

The first principle of the mail server according to the present invention is as follows.

The received mail transfer section 21 delivers an electronic mail to a communication terminal corresponding to the destination of the electronic mail received, among the communication terminals 20-1 to 20-n. The transmitted mail transfer section 23 delivers an electronic mail to the destinations of plural electronic mails transmitted from the communication terminals 20-1 to 20-n or the mail server 22 accommodating the destinations. The received mail transfer section 21 discards an electronic mail whose mail address indicating the destination of the electronic mail including predefined information is registered in a database 24, among the electronic mails received.

That is, the electronic mail which includes above-mentioned predefined information and whose destination is represented by any one of the mail addresses registered in the database 24 is prevented from being transferred to the destination.

Therefore, damages which are caused when the electronic mail is transferred to an original destination with no regulation are automatically prevented, as long as the database 24 is suitably updated.

The second principle of the mail server according to the present invention is as follows.

The received mail transfer section 21 delivers an electronic mail to a communication terminal corresponding to the destination of the electronic mail received, among the communication terminals 20-1 to 20-n.

The transmitted mail transfer section 23 delivers an electronic mail to the destinations of plural electronic mails transmitted from the communication terminals 20-1 to 20-n or the mail server 22 accommodating the destinations. The received mail transfer section 21 excludes an electronic mail, which includes predefined information and whose mail address indicating the destination is registered in the database 24, among the electronic mails received, from delivery targets to the communication terminal corresponding to the destination.

That is, the source of the electronic mail which includes above-mentioned predefined information and whose destination is represented by any one of the mail addresses registered in the database 24 is notified that the destination of the previously transmitted electronic mail does not exist or that the spam mail is refused, based on a predefined mail transfer protocol.

Therefore, the source of the spam mail is notified that the spam mail is not transferred to a desired destination, and thus a load can be reduced as compared to the case where the spam mail is simply discarded.

The third principle of the mail server according to the present invention is as follows.

The received mail transfer section 21 registers a mail address, which indicates a destination of an electronic mail including predefined information, in the database 24.

That is, as long as above-mentioned predefined information is included in the electronic mail transmitted by the communication terminal which is accommodated in the mail server according to the present invention or the electronic mail delivered from another mail server, the mail address indicating the destination of the electronic mail is suitably registered in the database 24.

Therefore, the standard to be served for identification of the spam mail whose transfer to the destination is queried or which is to be discarded is accurately updated according to a return mail which is transmitted by a communication terminal damaged by the spam mail.

The fourth principle of the mail server according to the present invention is as follows.

The database 24 is common to the mail server and other mail servers.

That is, the standard to be served for specification of the spam mail whose transfer to the destination is queried or which is to be discarded can be unitarily managed.

Therefore, as compared to the case where the standard is distributed and allocated in plural databases, a useless load and traffic increase according to connection or synchronization between the databases is avoided.

The fifth principle of the mail server according to the present invention is as follows.

The transmitted mail transfer section 23 delivers electronic mails, which are transmitted from the communication terminals 20-1 to 20-n and in each of which predefined information is appended to the mail address indicating the destination, to the mail server in which the destination is accommodated.

That is, the standard to be served for specification of the spam mail whose transfer to the destination is queried and which is to be discarded is provided to the mail server in which the communication terminal corresponding to the source of the spam mail is accommodated.

Therefore, the spam mail is prevented from being uselessly transferred to another mail server destination by means of the mail server.

The sixth principle of the mail server according to the present invention is as follows.

The received mail transfer section 21 delivers an electronic mail to a communication terminal corresponding to the destination of the electronic mail received, among the communication terminals 20-1 to 20-n. The transmitted mail transfer section 23 delivers an electronic mail to the destinations of plural electronic mails transmitted from the communication terminals 20-1 to 20-n or the mail server 22 accommodating the destinations. The transmitted mail transfer section 23 delivers the electronic mails, which are transmitted from the communication terminals 20-1 to 20-n and in each of which predefined information is appended to the mail address indicating the destination, to the mail server accommodating the destinations.

That is, the standard to be served for specification of the spam mail whose transfer to the destination is queried and which is to be discarded is provided to the mail server in which the communication terminal corresponding to the source of the spam mail is accommodated.

Therefore, the spam mail is prevented from being uselessly transferred from the mail server to another mail server destination.

The seventh principle of the mail server according to the present invention is as follows.

The received mail transfer section 21 discards an electronic mail in a form fit for attributes of the source and/or the destination of the electronic mail which includes predefined information and whose mail address indicating the destination is registered in the database 24.

That is, the discard form of the spam mail is maintained in a form fit for the attributes of the source and/or the destination of the spam mail.

Therefore, as compared to the case where the spam mail is simply discarded, the form of a configuration of a communication system or a service to be provided to the plural communication terminals can be flexibly adapted.

The eighth principle of the mail server according to the present invention is as follows.

The received mail transfer section 21 excludes an electronic mail from delivery targets to the communication terminal corresponding to the destination in a form fit for attributes of a source and/or a destination of an electronic mail which includes predefined information and whose mail address indicating the destination is registered in the database 24.

That is, the form of the spam mail which is excluded from the delivery targets to the destination of the spam mail is maintained in a form fit for the attributes of the source and/or the destination of the spam mail.

Therefore, as compared to the case where the spam mail is simply excluded from the delivery targets to the destination, the form of the configuration of the communication system or the service to be provided to the plural communication terminals can be flexibly adapted.

The ninth principle of the mail server according to the present invention is as follows.

The received mail transfer section 21 registers a mail address indicating a destination of an electronic mail into the database 24 in a form fit for attributes of a source and/or a destination of an electronic mail including predefined information.

That is, the form in which the mail address indicating the destination of the spam mail is registered in the database 24 is maintained in a form fit for the attributes of the source and/or the destination of the spam mail.

Therefore, as compared to the case where the form is constant regardless of the above-mentioned attributes, the form of the configuration of the communication system or the service to be provided to the plural communication terminals can be flexibly adapted.

The tenth principle of the main server according to the present invention is as follows.

The transmitted mail transfer section 23 delivers electronic mails to the mail server accommodating the destinations in a form fit for attributes of sources and/or destinations of electronic mails which are transmitted from the communication terminals 20-1 to 20-n and in each of which predefined information is appended to the mail address indicating the destination.

That is, the form in which the spam mail is delivered to the mail server indicating the destination of the spam mail is maintained in a form fit for the attributes of the source and/or the destination of the spam mail.

Therefore, as compared to the case where the form is constant regardless of the above-mentioned attributes, the form of the configuration of the communication system or the service to be provided to the plural communication terminals can be flexibly adapted.

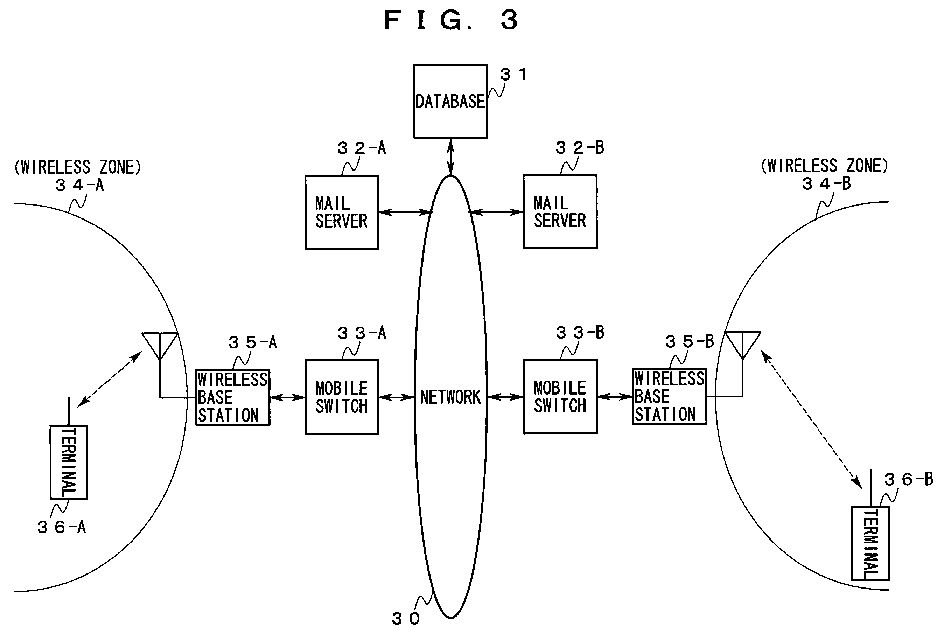

Fig. 3 is a diagram showing first to third embodiments of the present invention.

Referring to Fig. 3, in a network 30, a database 31, mail servers 32-A and 32-B, and mobile switches 33-A and 33-B are respectively arranged as nodes.

To the mobile switch 33-A, a wireless base station 35-A which forms a wireless zone 34-A is connected, and a terminal 36-A is located at the wireless zone 34-A.

To the mobile switch 33-B, a wireless base station 35-B which forms a wireless zone 34-B is connected, and a terminal 36-B is located at the wireless zone 34-B.

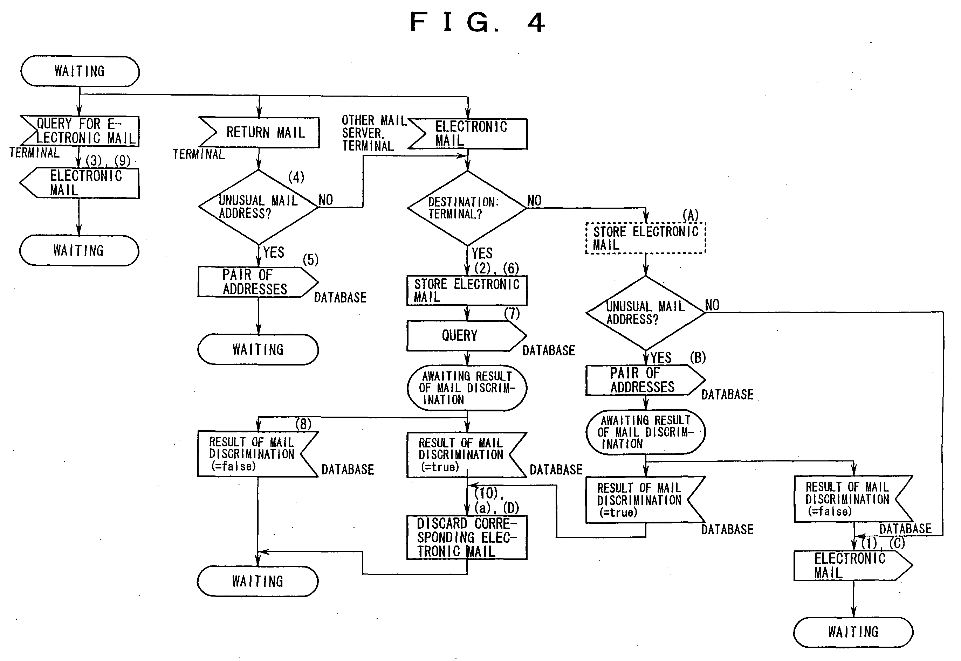

Fig. 4 is an operational flowchart of the mail server in the first to third embodiments of the present invention.

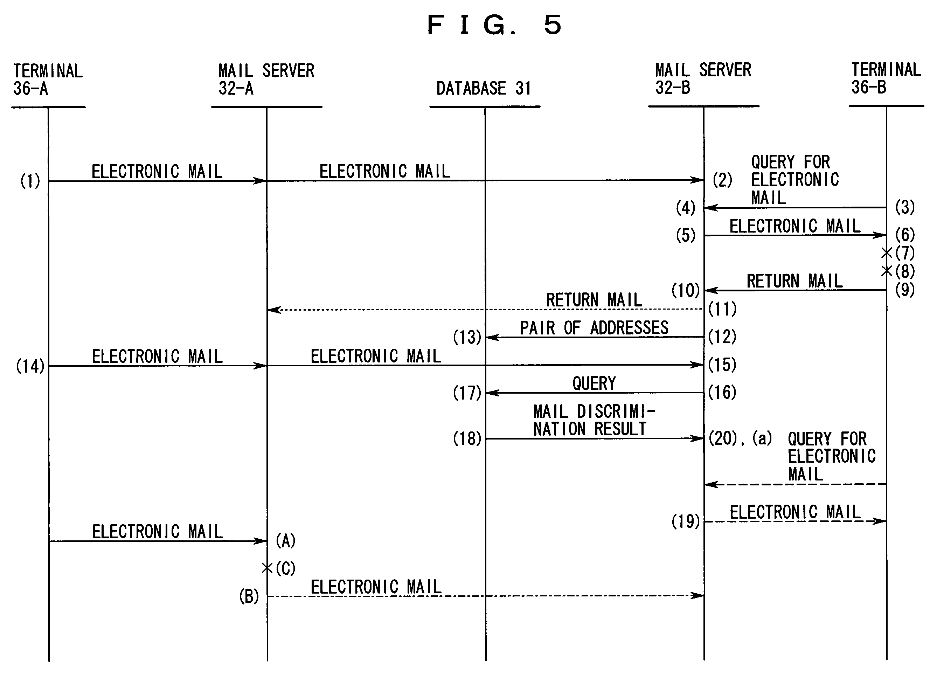

Fig. 5 is a diagram illustrating operations of the first to third embodiments of the present invention.

### [Embodiment 1]

Hereinafter, the operation of the first embodiment of the present invention will be described with reference to Fig. 3 to Fig. 5.

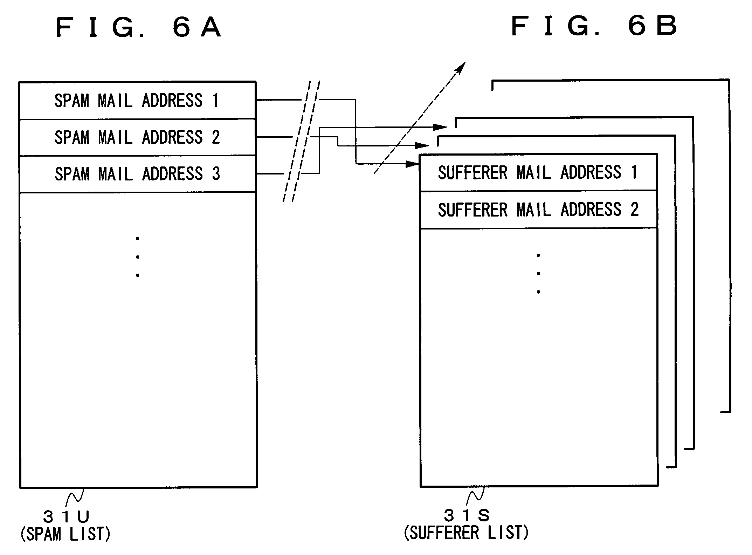

As shown in Fig. 6A, the database 31 is provided with a spam mail 31U constructed by a collection of records in each of which any one of the following items is stored.
· A mail address indicating a source of a spam mail (hereinafter, referred to as 'spam address')
· A specific value indicating that any spam address is not stored (here, for simplicity, the value is assumed as '0')

In addition, as shown in Fig. 6B, the database 31 is provided with a sufferer list 31S composed of a collection of records which is constructed as described below.
· Previously associated with the respective records of the spam mail 31U.
· Constructed as a string of the predefined number of fields in each of which the mail address of the terminal which assigns the electronic mail whose source is represented by the spam mail address stored in the corresponding record of the spam mail 31U as 'the spam mail' is stored.

Moreover, hereinafter, the mail addresses of the terminal 36-A and 36-B are assumed as 'a···a' and 'b···b', respectively, for simplicity.

The electronic mail is transmitted to the terminal 36-B destination by the terminal 36-A ((1) in Fig. 5) and transferred to the mail server 32-A via the wireless base station 35-A, the mobile switch 33-A, and the network 30 ((1) of Fig. 4). And then, it is delivered to and temporarily stored in the mail server 32-B via the network 30 ((2) in Fig. 4 and (2) in Fig. 5).

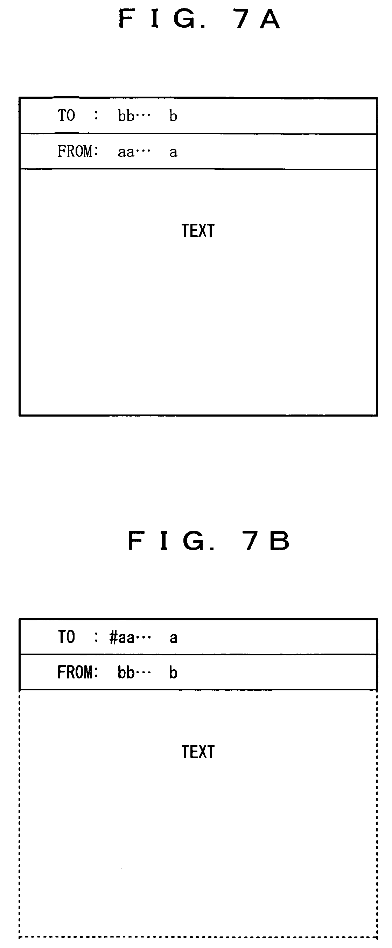

When identifying "query for 'an electronic mail whose destination is the terminal 36-B"' ((4) in Fig. 5), which is issued by the terminal 36-B via the wireless base station 35-B, the mobile switch 33-B, and the network 30 ((3) in Fig. 5), the mail server 32-B transfers an electronic mail fit for the query among the electronic mails previously stored (Fig. 7A) to the terminal 36-B ((3) in Fig. 4 and (5) in Fig. 5).

The terminal 36-B displays the content of the electronic mail notified in such a manner (the mail address of the source 'a···a', the mail address of the destination 'b···b', and the text) as a predefined document ((6) in Fig. 5).

In addition, when the displayed electronic mail is assigned as 'spam mail' ((7) in Fig. 5), the terminal 36-B generates 'the return mail', which is constructed as described below, based on the predefined human-machine interface (for example, press of a dedicated switch or operation based on a graphic user interface) ((8) in Fig. 5).
· The mail address 'b···b' of the destination of 'the spam mail' is set as 'the mail address indicating the source' ((1) in Fig. 7B).
· An unusual mail address which is constructed by the mail address 'a···a' of the source of 'the spam mail' and a predefined character '#' (hereinafter, for simplicity, it is assumed that it corresponds to a specific character or symbol which can not be understood as a portion of the mail address) appended to a head of the mail address is set to 'the mail address indicating the destination' ((2) in Fig. 7B).
· Any information is not included in the text ((3) in Fig. 7B) or predefined unusual information is appended.

In addition, the terminal 36-B transmits 'the return mail' to the mail server 32B via the wireless base station 35-B, the mobile switch 33-B, and the network 30 ((9) in Fig. 5).

When 'the return mail' is identified, the mail server 32B discriminates whether or not the mail address indicating the destination of the return mail corresponds to the 'unusual mail address' (the predefined character'(' is appended to the head thereof) (hereinafter, referred to as 'mail discrimination') ((4) in Fig. 4 and (10) in Fig. 5).

In addition, when the discrimination result is false, the mail server 32B transfers 'the return mail' corresponding to the mail server 32-A through the network 30 ((11) in Fig. 5). Accordingly, 'the return mail' can be received by the terminal 36-A.

However, when the discrimination result is true, the mail server 32B delivers the mail addresses 'b···b' and '#a···a' (hereinafter, referred to as 'a pair of addresses') respectively indicating the source and the destination of 'the return mail' to the database 31 destination ((5) in Fig. 4 and (12) in Fig. 5).

When 'the pair of addresses' is identified, the database 31 performs the following processes ((13) in Fig. 5).
(1) Exclude the character '(' from the mail address '#a···a' which is included in 'the pair of addresses' and generate the spam mail address 'a···a'.
(2) Discriminate whether or not the spam mail address 'a···a' is included in a record of the spam list 31U.
(3) When the discrimination result is false, perform the registration process described below.
   3-1) Retrieve an unused record (hereinafter, referred to as 'specific record') among the records of the spam list 31U.
   3-2) Register the above-mentioned spam mail address 'a···a' in the unused record retrieved.
   (4) When the discrimination result is true, identify a record in which the spam mail address 'a···a' is included, among the records of the spam list 31U.
   (5) Register the mail address 'b···b', which is included in 'the pair of addresses', in an unused field of the record corresponding to 'the specific record' among the records of the sufferer list 31S and merge the contents of all fields in 'the specific record'.

After the registration process is performed by the database 31, a new electronic mail which is transmitted by the terminal 36-A ((14) in Fig. 5) and whose destination corresponds to the terminal 36-B is temporarily stored in the mail server 32-B as described above ((6) in Fig. 4 and (15) in Fig. 5).

In addition, whenever such a new electronic mail is stored, the mail server 32-B sends to the data base 31 a "'query' which is included in the corresponding new electronic mail and includes the mail addresses 'a···a' and 'b···b' respectively indicating the source and the destination of the electronic mail, prior to the process started according to the "query of 'the electronic mail whose destination is the terminal 36-B"' issued by the terminal 36-B as described above ((7) in Fig. 4 and (16) in Fig. 5).

The database 31 discriminates whether or not all the following conditions are satisfied according to 'the query' (hereinafter, referred to as 'mail discrimination' ((17) in Fig. 5) and delivers 'mail discrimination result' indicating the result of the discrimination to the mail server 32-B ((18) in Fig. 5).
· The above-mentioned mail address 'a···a' is registered in a record (hereinafter, referred to as 'search record' of the spam list 31 U.
· The mail address 'b...b' is registered in a field of the record corresponding to the above-mentioned 'search record' among the records of the damage party list 31 S.

When the above-mentioned 'mail discrimination result' is false, the mail server 32-B identifies the corresponding new electronic mail as a formal mail and suitably transfers the electronic mail to the terminal 36-B according to the "query of the electronic mail whose destination is terminal 36-B'" ((8) and (9) in Fig. 4 and (19) in Fig. 5).

However, when the 'mail discrimination result' is true, the mail server 32-B excludes the corresponding new electronic mail from storage targets to a 'mail box to be served for storage of the electronic mail whose destination is the terminal 36-B' ((10) in Fig. 4 and (20) in Fig. 5).

That is, the pair of addresses of the source and the destination of the spam mail is automatically registered in the database 31 under 'the interface which is performed in the terminal 36-B corresponding to the destination and realizes an easy assignment of the spam mail'. The electronic mail including the pair of addresses registered in such a manner is automatically identified as the spam mail and discarded.

Further, as shown in Figs. 6A and 6B, the pair of addresses are divided for every source mail address, are registered as a collection of the mail addresses of the destinations corresponding to the mail addresses of the respective sources. In addition, they are unitarily managed in a manual manner.

Further, in the present embodiment, the configuration of the communication system which provides the mail service is not changed, except for software which realizes the processes, and thus compatibility with the protocol to be served for the mail service is basically not damaged.

Therefore, according to the present embodiment, complex operations are forced to an operator of a terminal damaged by the spam mail, and damages caused by the spam mails which are likely to be generated again and frequently are avoided at low cost and with high accuracy.

Moreover, in the present embodiment, the spam mail is simply discarded and the form of the process to be performed against the spam mail or the forms of other processes is not specifically described.

However, as long as such processes are adapted to the maintenance or operation which is performed by an operator of a system which implements a transfer service of an electronic mail, processes of any forms may be performed.

Further, the forms of the processes may be changed according to information which is provided from the terminals 36-A and 36-B or a terminal to be served for the maintenance/operation, as well as office data of the mobile switches 33-A and 33-B or the mail servers 32-A and 32-B (including subscriber classes, service orders, or the like).

### [Embodiment 2]

Hereinafter, an operation of the second embodiment of the present invention will be described with reference to Fig. 3 to Fig. 6.

The present embodiment has a feature that, when the 'mail discrimination result' is true, the process by the mail server 32-B is performed in the following sequence.

When the 'mail discrimination result' is true, the mail server 32-B regards the corresponding new electronic mail (spam mail) as 'an electronic mail whose destination is unknown' and excludes the electronic mail from the storage targets to 'the mail box to be served for storage of the corresponding electronic mail whose destination is the terminal 36-B' ((a) in Fig. 4 and (a) in Fig. 5).

That is, the above-mentioned spam mail is returned to the source of the spam mail based on the protocol which is applied to the mail server 32-B.

Therefore, according to the present embodiment, as compared to the case where the spam mail is simply discarded, a sender of the spam mail is actively notified 'that the destination of the spam mail does not exist' and is urged to be aware 'that the retransmission of the spam mail is ineffective'.

Moreover, in the present embodiment, the spam mail is simply returned to the source as 'the electronic mail whose destination is unknown'.

However, the form of such a return (for example, a moment to be returned, the number of times, or information to be appended when returning (an alarm to the sender may be included)) may be assigned by the terminal corresponding to the destination of the spam mail or suitably set based on the attributes of the source and/or the destination of the spam mail.

### [Embodiment 3]

Hereinafter, an operation of the third embodiment of the present invention will be described with reference to Fig. 3 to Fig. 6.

The present embodiment has a feature that the database 31 is common to the mail server 32-B and the mail server 32-A, and after the registration process is performed by the database 31 and when 'the new electronic mail (spam mail) whose destination corresponds to the terminal 36-B' is delivered from the terminal 36-A to the mail server 32-A ((A) in Fig. 5), the process by the mail server 32-A is performed in the following sequence.

When the above-mentioned new electronic mail is delivered, the mail server 32-A temporarily stores the electronic mail ((A) in Fig. 4) and performs the following processes.
· Acquire 'mail discrimination result' delivered from the database 31 by connecting with the database 31, similarly to the mail server 32-B in the first embodiment.
· When the 'mail discrimination result' is false, identify the corresponding new electronic mail as a formal electronic mail and delivers the new electronic mail to the mail server 32-B through the network 30 ((C) in Fig. 4 and (B) in Fig. 5).
· When the 'mail discrimination result' is true, discard the corresponding new electronic mail or treat it as 'the electronic mail whose destination is unknown', similarly to the mail server 32-B in the first and second embodiment ((D) in Fig. 4 and (C) in Fig. 5).

That is, the spam mail is invalidated by the mail server 32-A in which the terminal 36-A corresponding to the source of the spam mail is accommodated, without being transferred to the network 30 or other mail servers.

Therefore, according to the present invention, even in the case of a terminal whose source and the destination of the spam mail are accommodated in different mail servers, the increase in traffic due to the useless transfer of the spam mail through the network 30 can be avoided, and thus the load of the mail server concerned can be reduced.

Moreover, in the present embodiment, the database 31 performs 'the registration process' by the connection with the mail server 32-B in which the terminal 36-B corresponding to the destination of the spam mail is accommodated. Further, the database 31 performs the 'mail discrimination' by the connection with the mail server 32-B in which the terminal 36-A corresponding to the source of the spam mail is accommodated.

However, the present invention is not limited to this configuration. For example, when the return mail or electronic mail is delivered from the mail server 32-B to the mail server 32-A, 'the registration process' and 'the mail discrimination process' may be performed by connecting the mail server 32-A with the database 31.

Further, in the present embodiment, the process performed by the mail server 32-A is performed parallel to the process performed by the mail server 32-A in the first embodiment or second embodiment.

However, the present invention is not limited to this configuration. For example, the process performed by the mail server 32-A in the present embodiment may be performed such that the processes by the mail server 32-A in the above-mentioned first and second embodiments are not performed parallel to each other in any way.

Further, in the above-mentioned embodiments, the database 31 allows both the mail servers 32-A and 32-B to access thereto through the network 30.

However, the present invention is not limited to this configuration. For example, the database 31 may be divided into a database which allows only the mail server 32-A to access thereto and a database which allows only the mail server 32-B to access thereto. These databases are integrated into the mail servers 32-A and 32-B respectively.

Further, in the above-mentioned embodiments, the mail address indicating the destination of the return mail is composed of the pair of the mail address of the source of the spam mail and the character '#' appended to the head of the mail address.

However, such a character '#' may be appended to the text of the return mail or the mail address indicating the source of the return mail, for example, as long as the mail server identifies it as the return mail.

Further, the character '#' may be substituted with any character or symbol or may be constructed by 'a string of characters or symbols' as long as the mail server surely identifies it and the mail server does not uselessly interfere with the process to be inherently performed.

Further, in the above-mentioned embodiments, the human-machine interface to be performed so as to append the character '#' to the mail address indicating the destination of the return mail is not described in detail.

However, the human-machine interface is not necessarily implemented with a dedicated operating unit (for example, a press button switch or the like). For example, the human-machine interface may be implemented by utilizing existing software capable of editing the mail address.

Further, in the above-mentioned embodiments, when receiving the 'return mail', the mail servers 32-A and 32-B start the process which is to be performed to register the mail address of the source of 'the spam mail' in the database 31.

However, for example, the moment at which such a process is started may be the time when the electronic mail is sent to the mail server 32-B by the terminal 36-B and a control command or message instead of the above-mentioned 'return mail' is received.

Further, in the above-mentioned embodiments, only the mail address indicating the source of 'the spam mail' is registered in the spam list 31U and only the mail address of a person who is damaged by 'the spam mail' is registered in the sufferer list 31S for every mail address of the source of 'the spam mail'.

However, the spam list 31U and the sufferer list 31S may be constructed as a collection of any information as long as the spam mail to which the discard or other processes are to be performed is surely identified as the pair of mail addresses respectively indicating the source and the destination of the spam mail. Both of them may be merged.

Further, in the above-mentioned embodiments, the sufferer list 31S, in which 'the maximum number of mail addresses' which can be registered is common, is constructed as a collection of the records corresponding to the mail addresses registered in the spam list 31U.

However, for example, the sufferer list 31S may be constructed as a memory block in which a link is formed under a predetermined storage management (a resource management may be performed by an operating system) to 'the mail addresses registered in the spam list 31 U' or may be constructed as a collection of words.

Further, in the above-mentioned embodiments, both the source and the destination of 'the spam mail' correspond to the terminals of the mobile communication system.

However, the source and the destination are not limited to the terminals of the mobile communication system. For example, they may be vehicle-mounted or fixed terminals (including information terminals such as a personal computer, a PDA (personal digital assistant), or the like) as long as they transmit or receive an electronic mail through a predetermined mail server.

Further, to the communication system in which such a terminal is accommodated, other communication protocols, communication schemes, transfer schemes (transfer modes), source configurations, channel allocation, frequency allocation, modulation/demodulation schemes, or the like may be applied as long as it can transmit and receive the electronic mail.

Further, in the above-mentioned embodiments, 'the spam mail' having the common source and destination is automatically treated by connecting the terminals 36-A and 36-B, the mail servers 32-A and 32-B, and the database 31 as described above.

However, the present invention is not limited to this configuration. For example, the processes by the terminals 36-A and 36-B, the mail servers 32-A and 32-B, and the database 31 may be performed under load distribution or functional distribution of all or some of the wireless base stations 35-A and 35-B, the mobile switches 33-A and 33-B, and other devices which are included in the network 30 (including a base station control device, an exchange, a transfer device, and other nodes).

Further, in the above-mentioned embodiments, a switching scheme applied to the network 30 is not described in detail.

However, the network 30 is not limited to a message switching network or a store and forward switching network. For example, as long as the delivery of information required for the processes and the connections is surely achieved, a circuit switching network may be used. Further, the network 30 may be constructed by incorporating the circuit schemes in any way.

Further, in the above-mentioned embodiments, the pair of mail addresses of the source and the destination of the spam mail' are simply and automatically registered and the electronic mail identified based on the pair is treated as 'the spam mail'.

However, the present invention is not limited to this configuration. For example, the process (including the human-machine interface) which enables 'that the pair of addresses registered in such manner are automatically registered as monitoring targets and, when necessary, provided to facilities concerned may be performed.

Further, the present invention is not limited to the above-mentioned embodiments and various modifications may be made without departing from the spirit and scope of the present invention. Any improvement may be made in part or all of the components.

### INDUSTRIAL APPLICABILITY

In the first communication terminal according to the present invention, the moment of the action to be performed against the spam mail, together with the standard to be served for the identification of the spam mail which is transmitted again from the common source in the predefined information form is surely provided to the mail server.

In the second communication terminal according to the present invention, the demand of the operator who is damaged by the spam mail can be flexibly adapted.

In the third communication terminal according to the present invention, the moment of the action to be performed against the spam mail, together with the standard to be served for the identification of the spam mail, is provided to the mail server, without extremely limiting the format or the size of information to be delivered with the communication terminals accommodated.

In the fourth communication terminal according to the present invention, the moment of the action to be performed against the spam mail, together with the standard to be served for the identification of the spam mail in the mail server, is flexibly delivered to the mail server based on the desired communication protocol.

In the fifth communication terminal according to the present invention, the demand of the operator who is damaged by the spam mail can be flexibly adapted.

In the first mail server according to the present invention, the damages which are likely to be generated when the spam mail is transferred to the original destination with no regulation are automatically prevented, as long as the database is suitably updated.

In the second mail server according to the present invention, the source of the spam mail is notified that the spam mail is not transferred to the desired destination. Thus, as compared to the case where the spam mail is simply discarded, the load can be reduced.

In the third mail server according to the present invention, the standard to be served for the specification of the spam mail whose transfer to the destination is queried and which is to be discarded is accurately updated according to the return mail which is transmitted by the communication terminal damaged by the spam mail.

In the fourth mail server according to the present invention, as compared to the case where the standard is distributed into the plurality of databases, the useless load and the increase in traffic according to the connection or synchronization between the databases are avoided.

In the fifth and sixth mail servers according to the present invention, by the mail server which accommodates the communication terminal corresponding to the source of the mail server, the spam mail is prevented from being uselessly transferred to another mail server.

In the seventh to tenth mail servers according to the present invention, the configuration of the communication system or the form of the service to be provided to the communication terminals can be flexibly adapted.

Therefore, in the communication system to which the above-mentioned inventions are applied, the service quality and the reliability can be increased at low cost without drastically changing the configuration.

## Claims

1. A communication terminal comprising:
a mail acquiring section acquiring electronic mails received via a mail server;
a human-machine interfacing section which performs a human-machine interface relating to assignment of a spam mail among the electronic mails acquired by said mail acquiring section; and
a spam mail responding section delivering to the mail server a return mail in which a source of the spam mail assigned via said human-machine interfacing section is set as a destination and which includes predefined information indicating the spam mail.

2. The communication terminal according to Claim 1, wherein:
said human-machine interfacing section performs a human-machine interface relating to assignment of a form of an action which said mail server has to perform against another electronic mail transmitted from the source of said spam mail; and
said spam mail responding section appends the form of the action assigned via said human-machine interfacing section to the return mail to be delivered to said mail server.

3. The communication terminal according to Claim 1, wherein
said predefined information is appended to a mail address indicating a destination of said return mail in a predefined format.

4. The communication terminal according to Claim 2, wherein
said predefined information is appended to a mail address indicating a destination of said return mail in a predefined format.

5. A communication terminal comprising:
a mail acquiring section acquiring electronic mails received via a mail server;
a human-machine interfacing section which performs a human-machine interface relating to assignment of a spam mail among the electronic mails acquired by said mail acquiring section; and
a spam mail responding section 14A delivering to said mail server a mail address which indicates a source of the spam mail assigned via said human-machine interfacing section and predefined information indicating the spam mail.

6. The communication terminal according to Claim 5, wherein:
said human-machine interfacing section performs a human-machine interface relating to assignment of a form of an action which said mail server has to perform against another electronic mail transmitted from the source of said spam mail; and
said spam mail responding section notifies the mail server of the form of the action assigned via said human-machine interfacing section.

7. A mail server comprising:
a received mail transfer section delivering received electronic mails to communication terminals corresponding to destinations of the electronic mails; and
a transmitted mail transfer section delivering electronic mails transmitted from said communication terminals to destinations of the respective electronic mails or a mail server accommodating the destinations, wherein
said received mail transfer section discards an electronic mail whose mail address indicating a destination of an electronic mail including predefined information is registered in a database, among said received electronic mails.

8. A mail server comprising:
a received mail transfer section delivering received electronic mails to communication terminals corresponding to destinations of the electronic mails; and
a transmitted mail transfer section delivering electronic mails transmitted from said communication terminals to destinations of the respective electronic mails or a mail server accommodating the destinations, wherein
said received mail transfer section excludes among said received electronic mails an electronic mail, which includes predefined information and whose mail address indicating the destination is registered in a database, from delivery targets to a communication device corresponding to the destination.

9. The mail server according to Claim 7, wherein
said received mail transfer section registers the mail address indicating the destination of the electronic mail including said predefined information into said database.

10. The mail server according to Claim 8, wherein
said received mail transfer section registers the mail address indicating the destination of the electronic mail including said predefined information into the database.

11. The mail server according to Claim 7, wherein
the database is common to mail servers other than said mail server.

12. The mail server according to Claim 8, wherein
the database is common to mail servers other than said mail server.

13. The mail server according to Claim 7, wherein
said transmitted mail transfer section delivers an electronic mail, which is transmitted from said communication terminal and in which said predefined information is appended to a mail address indicating a destination, to a mail server accommodating the destination.

14. The mail server according to Claim 8, wherein
said transmitted mail transfer section delivers an electronic mail, which is transmitted from said communication terminal and in which said predefined information is appended to a mail address indicating a destination, to a mail server accommodating the destination.

15. A mail server comprising:
a received mail transfer section delivering received electronic mails to communication terminals corresponding to destinations of the electronic mails; and
a transmitted mail transfer section delivering electronic mails transmitted from said communication terminals to destinations of the respective electronic mails or a mail server accommodating the destinations, wherein
said transmitted mail transfer section delivers an electronic mail, which is transmitted from said communication terminal and in which said predefined information is appended to a mail address indicating a destination, to a mail server accommodating the destination.

16. The mail server according to Claim 7, wherein
said received mail transfer section discards the electronic mail, in a form fit for attributes of the source and/or a destination of the electronic mail which includes predefined information and whose mail address indicating the destination is registered in the database.

17. The mail server according to Claim 8, wherein
said received mail transfer section excludes the electronic mail from delivery targets to a communication device corresponding to the destination, in a form fit for attributes of the source and/or a destination of the electronic mail which includes predefined information and whose mail address indicating the destination is registered in the database.

18. The mail server according to Claim 9, wherein
said received mail transfer section registers the mail address indicating the destination of the electronic mail including the predefined information into the database, in a form fit for attributes of the source and/or the destination of the electronic mail including said predefined information.

19. The mail server according to Claim 10, wherein
said received mail transfer section registers the mail address indicating the destination of the electronic mail including the predefined information into said database, in a form fit for attributes of the source and/or the destination of the electronic mail including said predefined information.

20. The mail server according to Claim 13, wherein
said transmitted mail transfer section delivers the electronic mail to the mail server accommodating the destination, in a form fit for attributes of the source and/or the destination of the electronic mail which is transmitted from said communication terminal and in which predefined information is appended to the mail address indicating the destination.

21. The mail server according to Claim 14, wherein
said transmitted mail transfer section delivers the electronic mail to the mail server accommodating the destination, in a form fit for attributes of the source and/or the destination of the electronic mail which is transmitted from said communication terminal and in which predefined information is appended to the mail address indicating the destination.

22. The mail server according to Claim 15, wherein
the transmitted mail transfer section delivers the electronic mail to the mail server accommodating the destination, in a form fit for attributes of the source and/or the destination of the electronic mail which is transmitted from said communication terminal and in which predefined information is appended to the mail address indicating the destination.
